Europäisches Patentamt

European Patent Office

Office européen des brevets

(19)

(11) Veröffentlichungsnummer: **0 121 594 B1**

(12) **EUROPÄISCHE PATENTSCHRIFT**

(45) Veröffentlichungstag der Patentschrift:
17.09.86

(21) Anmeldenummer: 83110033.4

(22) Anmeldetag: 07.10.83

(51) Int. Cl.⁴: **C 08 L 23/08**, **C 08 L 31/04**, C 08 K 3/22, H 01 B 3/44, H 01 B 7/34

(54) Flammhemmende und strahlenresistente thermoplastische Formmassen für Kabelisolierungen.

(30) Priorität: 07.04.83 DE 3334730

(43) Veröffentlichungstag der Anmeldung:
17.10.84 Patentblatt 84/42

(45) Bekanntmachung des Hinweises auf die Patenterteilung:
17.09.86 Patentblatt 86/38

(84) Benannte Vertragsstaaten:
BE CH DE FR GB IT LI SE

(56) Entgegenhaltungen:
EP - A - 0 004 017
EP - A - 0 017 002

(73) Patentinhaber: BASF Aktiengesellschaft,
Carl-Bosch-Strasse 38, D-6700 Ludwigshafen (DE)

(72) Erfinder: Koehnlein, Ernst, Dr., Ungsteiner Strasse 4,
D-6700 Ludwigshafen (DE)
Erfinder: Koessler, Ludwig, Schlachthofstrasse 24 a,
D-6718 Gruenstadt (DE)

ACTORUM AG

**Beschreibung**

Die Erfindung betrifft flammhemmende thermoplastische Formmassen, die aus einem thermoplastischen Kunststoff, Aluminiumhydroxid, einem üblichen Antioxydans und gegebenenfalls Siliziumdioxid und einem üblichen Hilfsmittel bestehen.

Bei derartigen flammhemmenden Formmassen, die keine Halogenverbindungen als flammhemmende Mittel enthalten, entstehen im Brandfalle keine korrodierenden Zersetzungsprodukte wie Halogenwasserstoffe oder Halogene.

Aus der DE-OS 2 909 498 ist es bereits bekannt, eine flammhemmende Formmasse bestehend aus einem Ethylen-Vinylacetat-Copolymeren, Aluminiumhydroxid, Siliziumdioxid, maximal ca. 0,9%, polymerem 2,2,4-Trimethyl-1,2-dihydrochinon und ggf. üblichen Füllstoffen und Stabilisatoren für Kabelisolierungen oder Kabelummantelungen zu verwenden. Die bekannten Formmassen geben bei Schwelbränden keine korrodierenden halogenhaltigen Zersetzungsprodukte ab, sie sind durch Peroxide oder energiereiche Strahlung vernetzbar und weisen günstige mechanische Eigenschaften auf.

Derartige Formmassen sind aber gegenüber langandauernder Einwirkung von energiereichen Strahlen geringer Dosisleistung instabil, da sie teils durch Vernetzung, teils durch oxidierenden Abbau verspröden.

Der Erfindung lag dementsprechend die Aufgabe zugrunde, flammhemmende, thermoplastische Formmassen der eingangs beschriebenen Art aufzuzeigen, die eine verbesserte Beständigkeit gegenüber Langzeiteinwirkung energiereicher Strahlung aufweisen, ohne dass die mechanischen Eigenschaften wie Reissfestigkeit oder Reissdehnung, Verarbeitbarkeit, Alterungsstabilität und ohne dass die Brandschutzeigenschaften der Formmassen verschlechtert werden.

Diese Aufgabe wurde erfindungsgemäss durch thermoplastische Massen gemäss Ansprüchen 1 bis 5 gelöst.

Unter Ethylencopolymerisaten im Sinne der Erfindung werden Copolymerisate verstanden, die durch Copolymerisation von Ethylen mit copolymerisierbaren Comonomeren zustande kommen. Geeignete Ethylencopolymerisate sind die Ethylen-Propylen-Dien-Terpolymerisat-Kautschuke, wie sie in der Literaturstelle «Rubber Chemistry and Technology» 45, (1972), Seiten 709 bis 881 beschrieben sind, wobei die Dienkomponente z.B. aus Dicyclopentadien, Ethylidennorbornen oder 1,3-Butadien besteht. Geeignete Ethylencopolymerisate sind auch diejenigen, die 60 bis 85 Gew.-% Ethylen und 15 bis 40 Gew.-% eines Carbonsäureester enthaltenden Comonomeren aus der Gruppe der Vinylester von $C_2$- bis $C_4$-Alkancarbonsäuren oder $C_2$- bis $C_4$-Alkylester der $C_3$- bis $C_4$-Alkencarbonsäuren einpolymerisiert enthalten, wobei die Summe der Gewichtsprozente stets 100 ist, und wobei das Ethylencopolymerisat einen Schmelzindex, gemessen nach ASTM-D 1238-70 bei 190°C und 2,16 kg Belastung, von 0,1 bis 20,0, aufweist. Auch Mischungen verschiedener Copolymerisate sind geeignet. Derartige Ethylencopolymerisate sind bekannt und können z.B. nach üblichen Hochdruckpolymerisationsverfahren, wie sie beispielsweise in der US-PS 3 117 953 oder US-PS 4 217 431 beschrieben sind, hergestellt werden. Besonders geeignete Ethylencopolymerisate sind Ethylen-Vinylacetat-, Ethylen-Vinylpropionat-, Ethylen-n- oder -tert.-Butylacrylat-Copolymerisate, wobei das Ethylen-Vinylacetat-Copolymerisat am besten geeignet ist. Die Carbonsäureester enthaltenden Ethylencopolymerisate weisen üblicherweise eine Dichte von 0,890 bis 0,934 g/cm³, gemessen nach DIN 53 479, auf.

Das erfindungsgemäss einzusetzende Aluminiumhydroxid-Al(OH)₃- ist an sich wohlbekannt und im Handel erhältlich, so dass sich nähere Ausführungen erübrigen. Das Aluminiumhydroxid soll eine Teilchengrösse von 0,01 bis 10 μm aufweisen, in der erfindungsgemässen Formmasse sind 60 bis 170, bevorzugt 90 bis 150 Gew.-Teile Aluminiumhydroxid enthalten.

Die in Frage kommenden Antioxydantien aus der Reihe der sterisch gehinderten Phenole, sekundären aromatischen Amine oder Stickstoff-Heterocyclen sind bekannt und im Handbuch von J. Voigt «Chemie Physik und Technologie der Kunststoffe in Einzeldarstellungen» Springer-Verlag Berlin, Heidelberg, New York, 1966, Seiten 208 bis 240, 279 bis 285 und 313 beschrieben. Auch das bevorzugt einzusetzende polymere 2,2,4-Trimethyl-1,2-dihydrochinolin ist an sich als Alterungsstabilisator bekannt und beispielsweise zusätzlich in den US-Patentschriften 2 718 517, 3 047 521, 3 244 683, 3 296 189 und 3 901 849 dargestellt. Neu ist die hohe Konzentration dieser Antioxidantien. Sie sind in der Formmasse mit 7 bis 20, bevorzugt 10 bis 18 Gewichtsteilen enthalten.

Gegebenenfalls enthält die Mischung noch 6 bis 40 bevorzugt 6 bis 10 Gewichtsteile eines an sich bekannten Siliziumdioxids, das eine Teilchengrösse von 0,01 bis 50 μm aufweist. Das Siliziumdioxid ist im Handel erhältlich, so dass sich nähere Ausführungen erübrigen.

Zur besseren Verteilung des Aluminiumhydroxids und ggf. des Siliziumdioxids können der Formmasse übliche Hilfsmittel wie Stearinsäure und deren Erdalkalisalze in Mengen von weniger als 5 Gewichtsteilen pro 100 Gewichtsteile des Ethylencopolymerisats zugesetzt sein.

Die Herstellung der erfindungsgemässen Formmassen aus ihren Komponenten kann in einschlägig üblichen Mischvorrichtungen in einschlägig üblicher Weise erfolgen.

Es ist ein Vorteil der erfindungsgemässen Formmasse, dass sie durch energiereiche Strahlen, die über lange Zeit mit geringer Dosisleistung darauf einwirken, bei hoher Gesamtdosis nur wenig verändert werden, dass sie flammhemmend sind und bei Schwelbränden keine Korrosion verursachen, dass sie gegen Alterung im hohen Masse geschützt sind, dass sie durch Peroxid und energiereiche Strahlung hoher Dosisleistung vernetzbar sind und dass sie ausreichende Reissfestigkeit und Reissdehnung aufweisen.

Unter einer über lange Zeiträume einwirkenden energiereichen Strahlung geringer Dosisrate sind z.B. γ-Strahlen oder Elektronenstrahlen einer Beschleunigungsspannung von mehr als 0,5 kV und einer Dosisleistung von 0,01 bis 1,0 kGy/Tag (= 0,01 bis 1,0 kJ/kg/Tag) zu verstehen. Unter diesen Strahlenbelastungen wurden bei Polyethylen oder Ethylencopolymerisaten schon bei Gesamtdosen von 50 bis 100 kGy Materialveränderungen beobachtet, die einen Rückgang der Reissdehnung auf weniger als 50% des Ausgangswerts mit sich bringen. Wurden die erfindungsgemässen Formmassen unter diesen Bedingungen bestrahlt, erleiden sie erst bei Gesamtdosen von 500 bis 100 kGy die 50%-Grenze der Reissdehnung, bezogen auf den Wert des unbestrahlten Ausgangsprodukts.

Die neuen Formmassen eignen sich vor allem zum Herstellen von Ummantelungen und Isolierungen für elektrische Kabel, wobei die Formmassen ggf. mit Peroxiden oder energiereichen Strahlen hoher Dosisleistung vernetzt werden. Die Dosisleistung bei der Vernetzung der Formmassen durch energiereiche Strahlung sollte dabei 0,1 kGy/s bis 20 kGy/s betragen. Die zur Vernetzung erforderliche Strahlendosis liegt zwischen 30 und 200 kGy.

**Patentansprüche**

1. Flammhemmende und strahlenresistente Formmassen, bestehend aus
A) 100 Gewichtsteilen eines Ethylencopolymerisats,
B) 60 bis 170 Gewichtsteilen Aluminiumhydroxid, das eine Teilchengrösse von 0,01 bis 10 µm hat,
C) üblichen Antioxydantien aus der Reihe der sterisch gehinderten Phenole, sekundären aromatischen Amine oder Stickstoff-Heterocyclen,
D) gegebenenfalls 6 bis 40 Gewichtsteilen Siliziumdioxid, das eine Teilchengrösse von 0,01 bis 50 µm hat und
E) gegebenenfalls üblichen Hilfsmitteln in üblichen Mengen,
dadurch gekennzeichnet, dass 7 bis 20 Gewichtsteile Antioxydantien eingesetzt werden.

2. Formmassen nach Anspruch 1, dadurch gekennzeichnet, dass das Antioxydans (C) ein polymeres 2,2,4-Trimethyl-1,2-dihydrochinolin, das einen Erweichungsbereich von 100 bis 118°C aufweist, ist.

3. Formmassen nach Anspruch 1, dadurch gekennzeichnet, dass das Ethylencopolymerisat 60 bis 85 Gew.-% Ethylen und 15 bis 40 Gew.-% eines Carbonsäureester enthaltenden Comonomeren aus der Gruppe der Vinylester von $C_2$- bis $C_4$-Alkancarbonsäuren oder $C_2$- bis $C_4$-Alkylester der $C_3$- bis $C_4$-Alkencarbonsäuren einpolymerisiert enthält, wobei die Summe der Gewichtsprozente stets 100 ist, und wobei das Ethylencopolymerisat einen Schmelzindex, gemessen nach ASTM-D 1238-70 bei 190°C und 2,16 kg Belastung, von 1,0 bis 20,0 g/10 min aufweist.

4. Formmassen nach Ansprüchen 1 und 3, dadurch gekennzeichnet, dass das Ethylencopolymerisat ein Ethylen-Vinylacetat-Copolymerisat ist.

5. Formmassen nach Ansprüchen 1 und 2, dadurch gekennzeichnet, dass sie 10 bis 1 Gewichtsteile der Antioxydans (C) enthalten.

6. Verwendung der Formmassen nach Anspruch 1 für Kabelisolierungen und Kabelummantelungen, die gegebenenfalls mit Peroxiden oder energiereicher Strahlung hoher Dosisleistung vernetzt werden.

**Claims**

1. A flame-retardant and radiation-resistant moulding composition consisting of
A) 100 parts by weight of an ethylene copolymer,
B) 60 to 170 parts by weight of aluminium hydroxide having a particle size of from 0,01 to 10 µm,
C) conventional antioxidants selected from the group consisting of sterically hindered phenols, secondary aromatic amines and nitrogen heterocycles,
D) if desired, 6 to 40 parts by weight of silicon dioxide having a particle size of from 0,01 to 50 µm, and
E) if desired, conventional auxiliaries in the usual amounts,
wherein 7 to 20 parts by weight of antioxidants are employed.

2. A moulding composition as claimed in claim 1, wherein the antioxidant (C) is a polymeric 2,2,4-trimethyl-1,2-dihydroquinoline having a softening temperature of from 100 to 118° C.

3. A moulding composition as claimed in claim 1, wherein the ethylene copolymer contains 60 to 85% by weight of ethylene units and 15 to 40% by weight of units of a comonomer containing carboxylic acid esters selected from the group consisting of vinyl esters of $C_2$-$C_4$-alkanecarboxylic acids and $C_2$-$C_4$-alkyl esters of $C_3$-$C_4$-alkenecarboxylic acids, the sum of the percentages always being 100, and the ethylene copolymer having a melt index, measured according to ASTM-D 1238-70 at 190° C under a load of 2,16 kg, of from 1,0 to 20,0 g/10 min.

4. A moulding composition as claimed in claims 1 and 3, wherein the ethylene copolymer is an ethylene/vinyl acetate copolymer.

5. A moulding composition as claimed in claims 1 and 2, which contains from 10 to 18 parts by weight of antioxidant (C).

6. The use of a moulding composition as claimed in claim 1 for cable insulations and cable sheaths, which is optionally crosslinked with a peroxide or high-energy radiation at a high dose rate.

**Revendications**

1. Matières à mouler ignifuges et résistantes aux radiations, se composant
A) de 100 parties en poids d'un copolymère d'éthylène,
B) de 60 à 170 parties en poids d'hydroxyde d'aluminium qui a une grosseur de particules de 0,01 à 10 µm,
C) d'anti-oxydants usuels de la série des phénols empêchés stériquement, des amines aromatiques secondaires ou des composés hétérocycliques azotés,

D) le cas échéant, de 6 à 40 parties en poids de dioxyde de silicium qui a une grosseur de particules de 0,01 à 50 μm et

E) le cas échéant, d'adjuvants usuels dans les proportions habituelles, caractérisées en ce qu'il y est utilisé de 7 à 20 parties en poids d'anti-oxydants.

2. Matières à mouler selon la revendication 1, caractérisées en ce que l'anti-oxydant (C) est une 2,2,4-triméthyl-1,2-dihydroquinoléine polymère dont la gamme de ramollissement est comprise entre 100 et 118° C.

3. Matières à mouler selon la revendication 1, caractérisées en ce que le copolymère d'éthylène contient en liaison polymère 60 à 85 % en poids d'éthylène et 15 à 40 % en poids d'un comonomère contenant des esters d'acide carboxylique, choisi dans le groupe des esters vinyliques d'acides $C_2$- à $C_4$-alcanecarboxyliques ou des esters alkyliques en $C_2$ à $C_4$ des acides $C_3$- ou $C_4$- alcènecarboxyliques, la somme des pourcentages en poid étant toujours égale à 100 et le copolymère d'éthylène présentant un indice de fusion, mesuré suivant ASTM-D 1238-70 à 190° C et 2,16 kg de charge, de 1,0 à 20,0 g/10 mn.

4. Matières à mouler selon la revendication 1 ou 3, caractérisées en ce que le copolymère d'éthylène est un copolymère d'éthylène et d'acétate de vinyle.

5. Matières à mouler selon la revendication 1 ou 2, caractérisées en ce qu'elles contiennent de 10 à 18 parties en poids de l'anti-oxydant (C).

6. Utilisation des matières à mouler selon la revendication 1 pour des isolations de câbles et des gaines de câbles qui sont éventuellement réticulées avec des peroxydes ou un rayonnement pénétrant de taux de dose élevé.